# EUROPEAN PATENT APPLICATION

(11) **EP 3 978 570 A1**
(43) Date of publication of application: **06.04.2022**
(21) Application number: 20814701.7
(22) Date of filing: 28.05.2020
(51) Int. Cl.: C08L 77/00, C08L 71/00, C08L 87/00, C08K 7/02, C08J 5/04

(54) **THERMOPLASTIC RESIN COMPOSITION AND MOLDED PRODUCT USING SAME**

(30) Priority: 31.05.2019 KR 20190064931
(71) Applicant: Lotte Chemical Corporation, Seoul, 05551 (KR)
(72) Inventor: BAN, Kyunha, Uiwang-si Gyeonggi-do 16073 (KR); BAE, Yunseok, Uiwang-si Gyeonggi-do 16073 (KR); JIN, Youngsub, Uiwang-si Gyeonggi-do 16073 (KR); KIM, Hanna, Uiwang-si Gyeonggi-do 16073 (KR)
(74) Representative: Germain Maureau
(86) International application number: PCT/KR2020/006948
(87) International publication number: WO 2020/242232

(57) **Abstract**

The present invention relates to a thermoplastic resin composition and a molded product using same, the thermoplastic resin composition comprising, based on 100 parts by weight of a base resin including (A) 50 to 80 wt% of a polyamide resin and (B) 20 to 50 wt% of a fiber reinforcement, and (C) 2 to 20 parts by weight of a block copolymer including a polyether segment and a polyamide segment.

## Description

### [Technical Field]

A thermoplastic resin composition and a molded product using the same are disclosed.

### [Background Art]

With the recent developments of automobile and IT industries, research on replacing materials such as metals and the like with plastics is actively being conducted in terms of weight reduction, low manufacturing cost, improvements in design freedom, and simplified manufacturing processes. Polyamide resins are one of these metal-to-plastic replacement materials and have excellent rigidity, toughness, abrasion resistance, chemical resistance, oil resistance, reinforcement-adding effects, and the like and thus are widely used not only in automobiles but also over other industries.

Such polyamide resins are generally used as fiber-reinforced polyamide resins to which reinforcing materials such as glass fibers and carbon fibers are added in order to reinforce mechanical rigidity and heat resistance. Molded products using the fiber-reinforced polyamide resins may be, for example, applied throughout interior/exterior materials of automobiles. When used as the interior/exterior materials of automobiles, the molded products are highly likely to be used by being adhered to other automobile interior/exterior materials made of another material such as a metal or plastic body, glass, or the like.

However, since the fiber-reinforced polyamide resins have no or insufficient functional groups capable of forming a strong chemical bond with a urethane-based sealant, which is generally used as an adhesive for the automobile interior/exterior materials, it is necessary to further use a primer layer including an isocyanate group having excellent adhesion with the urethane-based sealant and the like in order to secure adhesion of the fiber-reinforced polyamide resins with the other automobile interior/exterior materials made of different materials (e.g., glass, metal, and the like).

Accordingly, development of a novel fiber-reinforced polyamide resin exhibiting strong adhesion with the urethane-based sealant without using a primer is required.

### [Disclosure]

### [Description of the Drawings]

### [Technical Problem]

The present invention provides a thermoplastic resin composition having improved adhesion to a urethane-based compound, and a molded product using same.

### [Technical Solution]

According to an embodiment, a thermoplastic resin composition comprises, based on 100 parts by weight of a base resin including (A) 50 to 80 wt% of a polyamide resin and (B) 20 to 50 wt% of a fiber reinforcement, and (C) 2 to 20 parts by weight of a block copolymer including a polyether segment and a polyamide segment.

The (A) polyamide resin may comprise polyamide 6, polyamide 66, polyamide 46, polyamide 11, polyamide 12, polyamide 610, polyamide 612, polyamide 61, polyamide 6T, polyamide 4T, polyamide 410, polyamide 510, polyamide 1010, polyamide 10T, polyamide 1212, polyamide 12T, polyamide MXD6, or a combination thereof.

The (B) fiber reinforcement may comprise a glass fiber, a carbon fiber, an aramid fiber, a ceramic fiber, or a combination thereof.

The (B) fiber reinforcement may have a cross-sectional aspect ratio of less than or equal to 1.5.

Based on 100 wt% of the (C) block copolymer, the polyether segment may be included in an amount of 5 to 85 wt%, and the polyamide segment may be included in an amount of 15 to 95 wt%.

The polyether segment may comprise a polyethylene glycol segment, a polypropylene glycol segment, a polytetramethylene glycol segment, a polytetrahydrofuran segment, or a combination thereof.

The polyether segment may have a number average molecular weight of 100 to 6,000 g/mol.

The polyamide segment may comprise a polyamide 6 segment, a polyamide 66 segment, a polyamide 46 segment, a polyamide 11 segment, a polyamide 12 segment, a polyamide 610 segment, a polyamide 612 segment, a polyamide 6I segment, a polyamide 6T segment, a polyamide 4T segment, a polyamide 410 segment, a polyamide 510 segment, a polyamide 1010 segment, a polyamide 10T segment, a polyamide 1212 segment, a polyamide 12T segment, or a combination thereof.

The polyamide segment may have a number average molecular weight of 400 to 4,000 g/mol.

The (C) block copolymer may have a melting point of 100 to 250 °C.

The thermoplastic resin composition may further comprise at least one additive selected from a compatibilizer, a nucleating agent, a coupling agent, a plasticizer, a lubricant, a release agent, an antibacterial agent, a heat stabilizer, an antioxidant, an ultraviolet (UV) stabilizer, a flame retardant, an antistatic agent, a colorant, a filler, or an impact modifier.

On the other hand, a molded product using the thermoplastic resin composition according to the embodiment may be provided.

### [Advantageous Effects]

The thermoplastic resin composition exhibits excellent toughness, abrasion resistance, chemical resistance, oil resistance, mechanical strength, and heat resistance, as well as improved adhesion to urethane-based compounds, and thus it is easy to adhere to other materials by using a urethane-based sealant without using a separate primer.

### [Mode for Invention]

Hereinafter, embodiments of the present invention are described in detail. However, these are presented as examples, and the present invention is not limited thereto, and the present invention is only defined by the appended claims.

According to an embodiment, a thermoplastic resin composition comprises, based on 100 parts by weight of a base resin including (A) 50 to 80 wt% of a polyamide resin and (B) 5 to 50 wt% of fiber reinforcement, and (C) 2 to 20 parts by weight of a block copolymer including a polyether segment and a polyamide segment.

Hereinafter, each component in the thermoplastic resin composition is described in detail.

### (A) Polyamide Resin

In an embodiment, various polyamide resins known in the art may be used as the polyamide resin, and for example, an aromatic polyamide resin, an aliphatic polyamide resin, or a mixture thereof may be used, but the present invention is not particularly limited thereto.

The aromatic polyamide resin is a polyamide including an aromatic group in a main chain, and may be a wholly aromatic polyamide, a semi-aromatic polyamide, or a mixture thereof.

The wholly aromatic polyamide refers to a polymer of an aromatic diamine and an aromatic dicarboxylic acid, and the semi-aromatic polyamide refers to inclusion of at least one aromatic unit and a non-aromatic unit between amide bonds. For example, the semi-aromatic polyamide may be a polymer of an aromatic diamine and an aliphatic dicarboxylic acid, or a polymer of an aliphatic diamine and an aromatic dicarboxylic acid.

Meanwhile, the aliphatic polyamide refers to a polymer of an aliphatic diamine and an aliphatic dicarboxylic acid.

Examples of the aromatic diamine may include, but are not limited to, p-xylenediamine and m-xylenediamine. In addition, these may be used alone or in combination of two or more.

Examples of the aromatic dicarboxylic acid may include phthalic acid, isophthalic acid, terephthalic acid, naphthalene-2,6-dicarboxylic acid, diphenyl-4.4'-dicarboxylic acid, and 1,3-phenylenedioxydiacetic acid, but the present invention is not limited thereto. In addition, these may be used alone or in combination of two or more.

Examples of the aliphatic diamine may include 1,2-ethylenediamine, 1,3-propylenediamine, 1,6-hexamethylenediamine, 1,12-dodecylenediamine, piperazine, and the like, but are not limited thereto. In addition, these may be used alone or in combination of two or more.

Examples of the aliphatic dicarboxylic acid may include adipic acid, sebacic acid, succinic acid, glutaric acid, azelaic acid, dodecanedioic acid, dimer acid, cyclohexanedicarboxylic acid, and the like, but are not limited thereto. In addition, these may be used alone or in combination of two or more.

In an embodiment, the polyamide resin may include polyamide 6, polyamide 66, polyamide 46, polyamide 11, polyamide 12, polyamide 610, polyamide 612, polyamide 61, polyamide 6T, polyamide 6T, polyamide 4T, polyamide 410, polyamide 510, polyamide 1010, polyamide 10T, polyamide 1212, polyamide 12T, polyamide MXD6, or a combination thereof.

In an embodiment, the polyamide resin may be included in an amount of 50 to 80 wt%, for example 55 to 80 wt%, for example 60 to 80 wt%, for example 65 to 80 wt%, or for example 65 to 75 wt%, based on 100 wt% of the base resin. When the content of the polyamide resin satisfies the above range, the thermoplastic resin composition and a molded product using the same may exhibit improved rigidity, toughness, abrasion resistance, chemical resistance, and oil resistance due to the polyamide resin.

On the other hand, when the content of the polyamide resin is less than 50 wt%, improved physical properties due to the polyamide resin may be difficult to obtain and the mechanical strength and/or heat resistance of a molded product using the same may be lowered.

### (B) Fiber Reinforcement

In an embodiment, the fiber reinforcement is added to reinforce the mechanical strength and heat resistance of the polyamide resin.

In an embodiment, the fiber reinforcement is not particularly limited, and various reinforcing materials used as fibers for reinforcing resins may be used. Examples of the fiber reinforcement may include a glass fiber, a carbon fiber, an aramid fiber, a ceramic fiber, or a combination thereof.

In an embodiment, the fiber reinforcement may have a cross-sectional aspect ratio of less than or equal to 1.5, for example less than or equal to 1.4, for example less than or equal to 1.3, for example less than or equal to 1.2, for example less than or equal to 1.1, or 1.0 to 1.5. The cross-sectional aspect ratio may be defined as a ratio a/b between the longest side (long side, a) and the shortest side (short side, b) when viewed with respect to the cross-section.

When the fiber reinforcement has the above-described cross-sectional aspect ratio, the fiber reinforcement has an oval shape having a cross-sectional shape of a circular shape and/or close to a circular shape, and the thermoplastic resin composition including the same has improved fluidity.

However, in an embodiment, the cross-sectional aspect ratio range of the fiber reinforcement is not necessarily limited to the above range. For example, similar plate-shaped and/or plate-shaped fiber reinforcement having a cross-sectional aspect ratio of greater than 2 and less than or equal to 10, for example, greater than or equal to 2 and less than or equal to 8, may be used. Alternatively, a similar plate-shaped and/or plate-shaped fiber reinforcement may be mixed with the aforementioned fiber reinforcement having an oval shape having a cross-sectional shape of a circular shape and/or close to a circular shape. When a similar plate-shaped and/or plate-shaped fiber reinforcement is used, the thermoplastic resin composition may have improved mechanical strength and impact resistance.

In an embodiment, the length of the fiber reinforcement is not particularly limited, but may be, for example 1 mm to 20 mm, for example 2 mm to 20 mm, for example 2 mm to 15 mm, or for example 2 mm to 13 mm.

In an embodiment, the surface of the fiber reinforcement may be treated with a surface improving agent for increasing surface bonding strength with the polyamide resin. Examples of the surface improving agent may include urethane and/or epoxy, and the surface treatment method may be easily performed by a person skilled in the art to which the present invention pertains.

In an embodiment, in consideration of the moisture absorption properties of the polyamide resin, it is desirable to use a fiber reinforcement having a moisture absorption rate of less than or equal to 0.05 wt% according to ASTM D570.

In an embodiment, the fiber reinforcement may be included in an amount of 20 to 50 wt%, for example 20 to 45 wt%, for example 20 to 40 wt%, for example 20 to 35 wt%, or for example 25 to 35 wt%, based on 100 wt% of the base resin. When the fiber reinforcement satisfies the above range, the thermoplastic resin composition and a molded product using the same may exhibit improved toughness, abrasion resistance, chemical resistance, oil resistance, mechanical strength, and heat resistance due to a fiber reinforced polyamide resin.

On the other hand, if the content of the fiber reinforcement is less than 20 wt%, the mechanical strength and heat resistance of the thermoplastic resin composition and a molded product using the same may decrease, and if it exceeds 50 wt%, a balance of physical properties due to the polyamide resin may be broken or lowered.

### (C) Block Copolymer Including Polyether Segment and Polyamide Segment

In an embodiment, the block copolymer including the polyether segment and the polyamide segment may allow the thermoplastic resin composition and a molded product using the same to have improved adhesion to the urethane-based compound.

Specifically, the block copolymer contains a hydroxyl group (-OH) at the terminal end of the polyether segment, and thus has improved adhesion to the urethane-based compound, while exhibiting improved compatibility with the polyamide resin in which the polyamide segment is included in the base resin. The thermoplastic resin composition according to an embodiment and a molded product using the same may have improved adhesion to the urethane-based compound while maintaining improved physical properties as a fiber-reinforced polyamide resin.

In an embodiment, the polyether segment constituting the block copolymer may contain at least one or more functional groups, for example, two or more functional hydroxyl groups. Examples of the polyether segment may include a polyethylene glycol segment, a polypropylene glycol segment, a polytetramethylene glycol segment, a polytetrahydrofuran segment, or a combination thereof, but are not limited thereto.

In an embodiment, the polyether segment may have a number average molecular weight of 100 to 6,000 g/mol, or for example, 200 to 3,000 g/mol.

In an embodiment, based on 100 wt% of the block copolymer, the polyether segment may be included in an amount of 5 to 85 wt%, for example 10 to 80 wt%, for example 20 to 80 wt%, for example 30 to 80 wt%, for example 40 to 80 wt%, for example 40 to 70 wt%, or for example 50 to 70 wt%.

Meanwhile, in an embodiment, the polyamide segment constituting the block copolymer may include various polyamide segments, for example, an aromatic polyamide segment, an aliphatic polyamide segment, or a combination thereof. Examples of the polyamide segment may be a polyamide 6 segment, a polyamide 66 segment, a polyamide 46 segment, a polyamide 11 segment, a polyamide 12 segment, a polyamide 610 segment, a polyamide 612 segment, a polyamide 6I segment, a polyamide 6T segment, a polyamide 4T segment, a polyamide 410 segment, a polyamide 510 segment, a polyamide 1010 segment, a polyamide 10T segment, a polyamide 1212 segment, a polyamide 12T segment, or a combination thereof, but is not necessarily limited thereto.

In an embodiment, the polyamide segment may have a number average molecular weight of 400 to 4,000 g/mol.

In an embodiment, the polyamide segment may be included in an amount of 15 to 95 wt%, for example 20 to 90 wt%, for example 20 to 80 wt%, for example 20 to 70 wt%, for example 20 to 60 wt%, for example 30 to 60 wt%, or for example 30 to 50 wt%, based on 100 wt% of the block copolymer.

In an embodiment, the block copolymer may have a melting point of 100 to 250 °C, for example 120 to 230 °C, for example 130 to 210 °C, for example 140 to 210 °C, for example 150 to 210 °C, for example 160 to 210 °C, for example 170 to 210 °C, for example 180 to 210 °C, for example 190 to 210 °C, or for example 195 to 205 °C.

In an embodiment, the block copolymer may be formed by block copolymerization of a polyethylene glycol segment and a polyamide 6 segment.

In an embodiment, the block copolymer may be included in an amount of 2 to 20 parts by weight, for example 2 to 19 parts by weight, for example 2 to 18 parts by weight, for example 2 to 17 parts by weight, for example 2 to 16 parts by weight, or for example 2 to 15 parts by weight, based on 100 parts by weight of the base resin. When the content of the block copolymer satisfies the aforementioned range, the thermoplastic resin composition and a molded product using the same may have improved adhesion to the urethane-based compound while maintaining improved physical properties due to the fiber-reinforced polyamide resin.

### (D) Other Additives

In addition to the components (A) to (C), the thermoplastic resin composition according to an embodiment may further include one or more additives, in order to balance each physical property under the condition of maintaining excellent both the physical properties due to the fiber-reinforced polyamide resin and the adhesion to the urethane due to the block copolymer or according to the end use of the thermoplastic resin composition.

Specifically, the additives may include a compatibilizer, a nucleating agent, a coupling agent, a plasticizer, a lubricant, a mold release agent, an antibacterial agent, a heat stabilizer, an antioxidant, an ultraviolet stabilizer, a flame retardant, an antistatic agent, a colorant, a filler, an impact modifier, etc., and these may be used alone or in a combination of two or more.

These additives may be appropriately included within a range that does not impair the physical properties of the thermoplastic resin composition, and specifically, may be included in an amount of less than or equal to 20 parts by weight based on 100 parts by weight of the base resin, but the present invention is not limited thereto.

The thermoplastic resin composition according to the present invention may be prepared by a known method for preparing a thermoplastic resin composition.

For example, the thermoplastic resin composition according to the present invention may be prepared in the form of pellets by mixing the components of the present invention and other additives and then melt-kneading in an extruder.

The molded product according to an embodiment of the present invention may be manufactured from the aforementioned thermoplastic resin composition.

Since the thermoplastic resin composition exhibits excellent toughness, abrasion resistance, chemical resistance, oil resistance, mechanical strength, and heat resistance as well as improved adhesion to urethane-based compounds, it is easy to adhere to other materials by using a urethane-based sealant without using a separate primer.

Accordingly, the thermoplastic resin composition and the molded product using the same may be widely applied to various products. For example, it may be usefully applied to interior/exterior materials of automobiles, such as frames requiring strong adhesion to glass, such as sunroof frames, windshield frames, and rear glass frames of automobiles.

Hereinafter, the present invention is illustrated in more detail with reference to examples and comparative examples. However, the following examples and comparative examples are provided for the purpose of descriptions and the present invention is not limited thereto.

### Examples 1 to 5 and Comparative Examples 1 to 5

Thermoplastic resin compositions of Examples 1 to 5 and Comparative Examples 1 to 5 were prepared according to each component content ratio shown in Table 1.

In Table 1, (A-1), (A-2), (A'), and (B) are included in a base resin and expressed as wt% based on a total weight of the base resin, and (C) is added to the base resin and expressed as parts by weight based on 100 parts by weight of the base resin.

The components described in Table 1 were dry-mixed and then quantitatively continuously put in a feed section of a twin-screw extruder (L/D = 36, Φ = 45 mm) and melted/kneaded. Subsequently, the thermoplastic resin compositions pelletized through the twin-screw extruder were dried at about 100 °C for about 4 hours, and then manufactured into flat specimens having a size of 100 mm x 350 mm x 3.2 mm (width x length x thickness) by using a 180 ton injection molding machine set at a cylinder temperature of about 270 °C and a mold temperature of about 90 °C.

**(Table 1)**

| | | | Exa mple 1 | Exa mple 2 | Exa mple 3 | Exa mple 4 | Exa mple 5 | Comp arative Exam ple 1 | Comp arative Exam ple 2 | Comp arative Exam ple 3 | Comp arative Exam ple 4 | Comp arative Exam ple 5 |
|---|---|---|---|---|---|---|---|---|---|---|---|---|
| Base resin | (A) | (A-1) | 70 | 70 | 70 | 70 | 0 | 70 | 60 | 50 | 40 | 70 |
| | | (A-2) | 0 | 0 | 0 | 0 | 70 | 0 | 0 | 0 | 0 | 0 |
| | (A') | | 0 | 0 | 0 | 0 | 0 | 0 | 10 | 20 | 30 | 0 |
| | (B) | | 30 | 30 | 30 | 30 | 30 | 30 | 30 | 30 | 30 | 30 |
| (C) | | | 5 | 10 | 15 | 2.5 | 5 | 0 | 0 | 0 | 0 | 1.5 |

Descriptions for each component shown in Table 1 are as follows.
(A) Polyamide resin
   (A-1) First polyamide resin
      Polyamide 6 resin with a melting point of about 223 °C and a relative viscosity of about 2.3 (RV 2.3, KP Chemtech)
   (A-2) Second polyamide resin
      Polyamide 6T resin (A8002, Solvay)
   (A') Acrylonitrile-butadiene-styrene copolymer resin
      Acrylonitrile-butadiene-styrene copolymer resin (LM400, LG Chem)
(B) Fiber reinforcement
   Glass fibers cut into about 4 mm chops after sorting long glass fibers with a cross-section diameter of about 13.7 µm in order of a size (183F-14P, Owens Corning)
(C) Block copolymer
   Block copolymer including about 60 wt% of polyethylene glycol segments and about 40 wt% of polyamide 6 segments (PEBAX MH 1657, Arkema)

### Experimental Examples

The flat specimens were experimented with respect to a urethane sealant under the following experiment conditions, and the results are shown in Table 3.

Specifically, the flat specimens were first horizontally fixed by using a jig. Onto each flat specimen, a urethane-based sealant (BS15506KN, DOW Chemical Co.) preheated at 40 °C for 30 minutes in an oven was discharged to be 20 cm long by using a nozzle having a diameter of 1 cm and thus was double-seated in a vertical direction. Subsequently, after disposing 5 mm-high spacers on both side of the flat specimen, a releasing paper was disposed on the applied urethane-based sealant on the flat specimen, and then vertically pressed so that the urethane-based sealant might have a thickness of 5 mm.

After removing the releasing paper, the pressed urethane-based sealant on the flat specimen was cured at 20 °C under 65 RH% for 72 hours, and then additionally processed according to each evaluation item as shown in Table 2, completing the specimens for evaluations of room temperature integrity, heat resistance, water resistance, and chemical resistance, respectively.

**(Table 2)**

| Evaluation | Condition |
|---|---|
| Room temperature | Left at 20 °C and 65 RH% for 96 hours |
| Heat resistance | After being left for 336 hours at 90 °C, further left for 1 hour at 20 °C and 65 RH% |
| Water resistance | After immersing in distilled water at 40±2 °C for 336 hours, further left for 1 hour at 20 °C and 65 RH% |
| Chemical resistance | After immersing in the reagent for evaluation [a 1:1 mixed solution of car window washer fluid (alcohol washer fluid) and distilled water] at 40±2 °C for 336 hours, further left for 1 hour at 20 °C and 65 RH% |

Subsequently, the specimens for each evaluation (room temperature integrity, heat resistance, water resistance, chemical resistance) were adjusted and fixed to form an angle of 45° with the ground by using a jig at a temperature of 20 °C at 65 RH%. After the urethane-based sealant layer was peeled off by about 2 cm at the uppermost side with respect to the ground among four sides of the urethane-based sealant layer, a sheath was formed between the peeled urethane-based sealant layer and the flat specimen to record a point where the peeling started.

Subsequently, the peeled portion was fixed with pliers and then pulled in a horizontal direction until the urethane-based sealant layer was peeled off by about 1 cm further, and another sheath was formed between the peeled urethane-based sealant layer and the flat specimen to record a point where 1 cm further peeled.

These 1 cm peeling and peeling point recording was repeated, until the urethane-based sealant layer was completely peeled off from the flat specimen.

Subsequently, adhesion between the flat specimen and the urethane-based sealant layer was evaluated by measuring an area where the urethane-based sealant remained cohesively destroyed on the surface of the flat specimen from which the urethane-based sealant layer was peeled off. The more the urethane-based sealant layer was not clearly peeled off but remained cohesively destroyed on the surface of the flat specimen, the more excellent the adhesion between the flat specimen and the urethane-based sealant layer.

Specifically, when the area where the urethane-based sealant remained cohesively destroyed was 90 % or more based on 100 % of the entire area where the urethane-based sealant was initially formed, it was judged as ○, and when the area where the urethane-based sealant remained cohesively destroyed was 90 % or less, it was judged as x, and the results are shown in Table 3.

**(Table 3)**

| Evaluation | Exa mple 1 | Exa mple 2 | Exa mple 3 | Exa mple 4 | Exa mple 5 | Comp arative Exam ple 1 | Comp arative Exam ple 2 | Comp arative Exam ple 3 | Comp arative Exam ple 4 | Comp arative Exam ple 5 |
|---|---|---|---|---|---|---|---|---|---|---|
| Room | ○ | ○ | ○ | ○ | ○ | × | × | × | × | ○ |
| temperature | | | | | | | | | | |
| Heat resistance | ○ | ○ | ○ | ○ | ○ | × | × | × | × | × |
| Water resistance | ○ | ○ | ○ | ○ | ○ | × | × | × | × | × |
| Chemical resistance | ○ | ○ | ○ | ○ | ○ | × | × | × | × | × |

Referring to Tables 1 and 3, the thermoplastic resin compositions of Examples 1 to 5 prepared by adding a block copolymer including a polyether segment and a polyamide segment within the above content ranges to a fiber-reinforced polyamide base resin including a polyamide resin and a fiber reinforcement exhibited excellent adhesion with an urethane-based compound, compared with those of the comparative examples.

As described above, the present invention has been described through preferred embodiments, but a person having ordinary skill would understand easily that the present invention is not limited thereto, and various modifications and variations may be possible without departing from the concept and scope of the following claims.

## Claims

1. A thermoplastic resin composition, comprising,
based on 100 parts by weight of a base resin including
(A) 50 to 80 wt% of a polyamide resin and
(B) 20 to 50 wt% of a fiber reinforcement, and
(C) 2 to 20 parts by weight of a block copolymer including a polyether segment and a polyamide segment.

2. The thermoplastic resin composition of claim 1, wherein the (A) polyamide resin comprises polyamide 6, polyamide 66, polyamide 46, polyamide 11, polyamide 12, polyamide 610, polyamide 612, polyamide 61, polyamide 6T, polyamide 4T, polyamide 410, polyamide 510, polyamide 1010, polyamide 10T, polyamide 1212, polyamide 12T, polyamide MXD6, or a combination thereof.

3. The thermoplastic resin composition of claim 1 or claim 2, wherein the (B) fiber reinforcement comprises a glass fiber, a carbon fiber, an aramid fiber, a ceramic fiber, or a combination thereof.

4. The thermoplastic resin composition of any one of claim 1 to claim 3, wherein the (B) fiber reinforcement has a cross-sectional aspect ratio of less than or equal to 1.5.

5. The thermoplastic resin composition of any one of claim 1 to claim 4, wherein
based on 100 wt% of the (C) block copolymer,
5 to 85 wt% of the polyether segment and
15 to 95 wt% of the polyamide segment are included.

6. The thermoplastic resin composition of any one of claim 1 to claim 5, wherein the polyether segment comprises a polyethylene glycol segment, a polypropylene glycol segment, a polytetramethylene glycol segment, a polytetrahydrofuran segment, or a combination thereof.

7. The thermoplastic resin composition of any one of claim 1 to claim 6, wherein the polyether segment has a number average molecular weight of 100 to 6,000 g/mol.

8. The thermoplastic resin composition of any one of claim 1 to claim 7, wherein the polyamide segment comprises a polyamide 6 segment, a polyamide 66 segment, a polyamide 46 segment, a polyamide 11 segment, a polyamide 12 segment, a polyamide 610 segment, a polyamide 612 segment, a polyamide 6I segment, a polyamide 6T segment, a polyamide 4T segment, a polyamide 410 segment, a polyamide 510 segment, a polyamide 1010 segment, a polyamide 10T segment, a polyamide 1212 segment, a polyamide 12T segment, or a combination thereof.

9. The thermoplastic resin composition of any one of claim 1 to claim 8, wherein the polyamide segment has a number average molecular weight of 400 to 4,000 g/mol.

10. The thermoplastic resin composition of any one of claim 1 to claim 9, wherein the (C) block copolymer has a melting point of 100 to 250 °C.

11. The thermoplastic resin composition of any one of claim 1 to claim 10, which further comprises at least one additive selected from a compatibilizer, a nucleating agent, a coupling agent, a plasticizer, a lubricant, a release agent, an antibacterial agent, a heat stabilizer, an antioxidant, an ultraviolet (UV) stabilizer, a flame retardant, an antistatic agent, a colorant, a filler, or an impact modifier.

12. A molded product manufactured using the thermoplastic resin composition of any one of claim 1 to claim 11.
